# EUROPÄISCHE PATENTSCHRIFT

(11) **EP 3 565 851 B1**
(45) Veröffentlichungstag und Bekanntmachung des Hinweises auf die Patenterteilung: **08.07.2020**
(21) Anmeldenummer: 19712814.3
(22) Anmeldetag: 29.03.2019
(51) Int. Cl.: C08G 61/08, B01D 57/00, B01D 61/14, C09D 165/00, C09J 165/00, C08L 65/00, B01D 61/02

(54) **VERFAHREN ZUR HERSTELLUNG VON TEMPERATURSTABILEN POLYALKENAMEREN**
METHOD FOR PRODUCING TEMPERATURE-STABLE POLYALKENAMERS
PROCÉDÉ DE PRODUCTION DE POLYALCÉNAMÈRES THERMOSTABLES

(30) Priorität: 29.03.2018 EP 18164862
(43) Veröffentlichungstag der Anmeldung: 13.11.2019
(73) Patentinhaber: Evonik Operations GmbH, 45128 Essen (DE)
(72) Erfinder: MICOINE, Kévin, 45701 Herten (DE); KOLEVA, Velichka, 48734 Reken (DE); HACKENBERGER, Dagmar Isabell, 45699 Herten (DE); VAZQUEZ TORAN, Pedro, 46236 Bottrop (DE)
(74) Vertreter: Evonik Patent Association
(86) Internationale Anmeldenummer: PCT/EP2019/058082
(87) Internationale Veröffentlichungsnummer: WO 2019/185911

(56) Entgegenhaltungen:
- EP-A1- 2 933 274
- EP-A1- 3 034 538
- EP-A1- 3 153 227
- Anonymous: "Synthesis and Applications of RuCl2(CHR')(PR3)2:? The Influence of the Alkylidene Moiety on Metathesis Activity - Journal of the American Chemical Society (ACS Publications)", , 10. Januar 1996 (1996-01-10), XP055463557, DOI: 10.1021/ja952676d Gefunden im Internet: URL:https://pubs.acs.org/doi/pdf/10.1021/j a952676d [gefunden am 2018-03-28]

## Beschreibung

Die vorliegende Erfindung betrifft ein Verfahren zur Herstellung Polyalkenamer-haltiger Zusammensetzungen.

Polyalkenamere wie Polyoctenamer (z.B. Vestenamer® der Fa. Evonik) werden zum Beispiel in Reifen, Gummiartikeln, Klebstoffen oder Verpackungen eingesetzt. Der Schmelzpunkt ist bei vielen Anwendungen wichtig, weil ein Polyoctenamer mit einem höheren Schmelzpunkt eine höhere Kristallinität aufweist, was zu besseren mechanischen Eigenschaften in den meisten Anwendungen führt.

Polyoctenamere können durch ringöffnende Metathese von Cycloocten hergestellt werden. Zu diesem Zweck muss ein Katalysator zugegeben werden. Als Katalysator eignen sich beispielweise Wolfram-Komplexe (US3597406, US4095033, DE2619197), Molybdän-Komplexe (EP0218138; Polymer 1995, 36, 2787-2796) und Ruthenium-Komplexe (J. Am. Chem. Soc. 1993, 115, 9858-9859; Macromolecules 1993, 26, 4739-4741). Ruthenium-Carbene sind insbesondere vielfältig anwendbar und tolerieren alle gängigen chemischen Gruppen (EP0626402, US8324334, US2016/159942). Ganz besonders geeignet sind Ruthenium-Carben-Komplexe, die als eines der charakteristischen Merkmale einen N-heterocyclischen-Carben-Liganden tragen.

Ringöffnende Polymerisationsreaktionen können beispielsweise durch die Zugabe von Alkylvinylethern wie Ethylvinylether oder Butylvinylether sowie von Alkylvinylsulfiden wie Ethylvinylsulfid gestoppt werden (Macromolecules 2000, 33, 6239-6248). Dabei wird ein Fischer-Carben gebildet, das die Ringöffnungsmetathese nicht katalysiert. Außerdem wird das Ruthenium-Carben durch diese chemische Reaktion von der Polymerkette abgelöst.

Mit den bisherigen Herstellungsverfahren mit Mo- oder W-Katalysatoren können Polyoctenamere mit einem Schmelzpunkt von maximal 54 °C bis 56 °C hergestellt werden. Außerdem enthalten solche Polymere üblicherweise hohe Metallbestandteile sowie hohe Chloridanteile. Diese liegen über 50 ppm Wolfram oder Molybdän sowie über 50 ppm Aluminium (bei Al-basierten Cokatalysatoren) bzw. über 50 ppm Chlorid. Die Chlorid- und Metallspuren bleiben im Polymermaterial und können nicht ohne Weiteres abgetrennt werden. Diese Metallspuren müssen bei vielen Anwendungen, zum Beispiel in der Lebensmittelindustrie oder in Medizin, so gering wie möglich gehalten werden.

Polyoctenamer wird nach der Synthese im Produktionsmaßstab bei einer Temperatur über 180 °C während mehrerer Stunden unter Vakuum getrocknet, um das Lösemittel der Reaktion vollständig zu entfernen. Darüber hinaus kann das Polymer je nach Anwendung bei hoher Temperatur verarbeitet werden. Während dieser Hochtemperaturbehandlungen können Nebenreaktionen stattfinden, die den Schmelzpunkt und die Schmelzenthalpie des Polymers verringern. Häufig liegen die Schmelzpunkte von Polyoctenamer unterhalb von 50 °C. Dabei wird das cis/trans-Verhältnis der Doppelbindungen im Polymer nur leicht geändert, was allein die Veränderung des Schmelzpunkts nicht erklärt. Diese Veränderung wird vielmehr durch eine Regioisomerisierung der Doppelbindungen entlang der Polymerkette erklärt, was durch die Anwesenheit zusätzlicher Signale im 1H-NMR nachgewiesen werden kann. Eine Verringerung des Schmelzpunkts und der Schmelzenthalpie bedeutet eine Veränderung der physiko-chemischen Eigenschaften des Polymers, was in sehr vielen Anwendungen nicht akzeptabel ist.

Die WO 2017/060363 beschreibt die Aufreinigung von Polyalkenameren mittels Membranfiltration. Das Polymer wird mit einem Wolfram/Aluminium-Katalysatorsystem hergestellt und weist einen Schmelzpunkt von 54 °C auf. Zudem sind Metallanteile an Aluminium und Wolfram von über 50 ppm enthalten. Weiterhin wird die Reaktion mit Ruthenium-Carbenen als Katalysator beschrieben. Allerdings bleibt der Katalysator mit der Polymerkette chemisch verbunden. Außerdem kann der Katalysator mit der Zeit in anorganische Rutheniumspezies zerfallen, welche das Membranmaterial verstopfen.

Im industriellen Herstellungsverfahren der Polyalkenamere können mehrere Stunden Zeit zwischen der Polymersynthese und der Polymeraufreinigung mittels Membranfiltration vergehen, insbesondere bei einer Betriebsstörung. Aus diesem Grund muss der Katalysator lange stabil in Lösung bleiben, damit er ohne Problem vom Polymer durch die Membran abgetrennt wird.

In EP 3034538 A1 werden Biomaterialien für medizinische Anwendungen beschrieben, welche Antibiotika enthalten. In einem Beispiel werden Norbornen und funktionalisiertes Norbornen in Anwesenheit eines Katalysators polymerisiert, wobei der Katalysator im Anschluss durch Zugabe von Ethylvinylether deaktiviert wird. Es folgt eine Aufreinigung mittels Ultrafiltration. EP 2933274 A1 (US 2015/299362 A1) offenbart Verfahren zur Herstellung von Polymeren mittels ringöffnender metathetischer Polymerisation. Dabei werden preiswerte Ru-Verbindungen generiert und die Menge an Katalysator bei verbesserter Katalysator-Aktivität verringert. Schwab et al. beschreiben in J. Am. Chem. Soc. 1996, 118, 100 die Synthese und Anwendung von Ru-Katalysatoren, wobei u.a. Cycloocten eingesetzt und Ehylvinylether zugegeben werden. Es folgt eine Aufreinigung mittels Säulen und Fällen.

Die Aufgabe der vorliegenden Erfindung bestand darin, Polyalkenamere bereitzustellen, die die Nachteile des Standes der Technik nicht aufweisen. Die Polyalkenamere sollten gegenüber bekannten Polyalkenameren einen höheren Schmelzpunkt aufweisen. Zudem sollten möglichst geringe Metallanteile in den Polyalkenameren enthalten sein. Darüber hinaus sollte das Polyalkenamer bei einer Verarbeitung Temperaturen von 180 °C seine Eigenschaften wie den Schmelzpunkt beibehalten und damit temperaturstabil sein. Ein Polyoctenamer sollte einen Schmelzpunkt von mindestens 57 °C aufweisen. Darüber hinaus soll der Katalysator möglichst lange stabil und in Lösung verbleiben, damit keine anorganischen, unlöslichen Spezies gebildet werden, die die Membran verstopfen können.

Überraschend wurde ein Verfahren zur Herstellung von Polyalkenameren gefunden, wodurch die Aufgabe gelöst werden konnte. Das erfindungsgemäße Verfahren zur Herstellung einer Polyakenamer-haltigen Zusammensetzung umfasst dabei die folgenden Schritte:
a) Umsetzen mindestens eines Cycloalkens durch ringöffnende, metathetische Polymerisation in mindestens einem organischen Lösemittel unter Erhalt einer Polyalkenamer-haltigen Produktmischung, wobei die Polymerisation in Gegenwart mindestens eines metallhaltigen Katalysators durchgeführt wird, und wobei das Metall ausgewählt ist aus Rhenium, Ruthenium, Osmium oder Mischungen daraus,
b) Zugabe mindestens eines Alkylvinylderivats, welches ausgewählt ist aus C1- bis C12-Alkylvinylether, C1- bis C12-Alkylvinylsulfid oder Mischungen davon, nach der Polymerisation, wobei die Stoffmenge des Alkylvinylderivats mindestens der Stoffmenge an Katalysator entspricht,
c) Zugabe mindestens einer Verbindung A nach Zugabe des Alkylvinylderivats, wobei die Stoffmenge der Verbindung A mindestens der Stoffmenge an Katalysator entspricht, und wobei die Verbindung A mindestens eines der Merkmale i) oder ii) aufweist:
   i) mindestens eine funktionelle Gruppe, die ausgewählt ist aus primären Aminogruppen, sekundären Aminogruppen, tertiären Aminogruppen, Thiolgruppen, Estergruppen, Carbonatestergruppen, Acetalgruppen, Aldehydgruppen, Carbonylgruppen, Carboxamidogruppen, Imidogruppen, Oximgruppen, Thioestergruppen, Nitrilgruppen, Thiocyanatgruppen, primären Ketiminogruppen, sekundären Ketiminogruppen, primären Aldiminogruppen, sekundären Aldiminogruppen, Sulfinylgruppen, Aminoxidgruppen, Carboxygruppen, Phosphinogruppen, Phosphanoxidgruppen, Phosphonogruppen oder
   ii) mindestens ein gesättigter oder ungesättigter aliphatischer oder aromatischer heterocyclischer Ring mit 3 bis 14 Ringatomen, wobei die Ringatome mindestens ein Kohlenstoffatom und mindestens ein Atom ausgewählt aus Sauerstoff, Stickstoff und Schwefel enthalten, und
d) Aufarbeiten der Produktmischung zur Entfernung des Katalysators unter Erhalt der Polyalkenamer-haltigen Zusammensetzung, wobei die Aufarbeitung mittels Membranfiltration in mindestens einem organischen Lösemittel erfolgt.
Die mindestens eine Verbindung A stellt für das Metall des metallhaltigen Katalysators einen Liganden dar.s

Es wurde überraschend gefunden, dass die thermische Stabilität der Polyalkenamere erheblich verbessert wird, wenn Fischer-Carbene (Katalysator-Alkylvinylether-Verbindung A-Addukte bzw. Katalysator-Alkylvinylsulfid-Verbindung A-Addukt) durch die Zugabe eines Alkylvinylethers bzw. Alkylvinylsulfids und mindestens einer Verbindung A nach dem Polymerisationsschritt gebildet werden und eine anschließende Membranfiltration erfolgt. Die Zugabe von Alkylvinylether bzw. Alkylvinylsulfid erlaubt es, die Polymerisation zu stoppen und den Katalysator von der Polymerkette abzulösen. Die Zugabe der Verbindung A erhöht deutlich die Stabilität des Fischer-Carbens, so dass der Katalysator mehrere Stunden nach der Synthese in Lösung bleiben kann, ohne unlösliche anorganische metallkatalysatorhaltige Verbindungen zu bilden. Zudem lassen sich diese Fischer-Carbene in der Membranfiltration effizienter abtrennen als andere metallhaltige Katalysatoren. Hierdurch können Polyalkenamere mit geringeren Metallanteilen erhalten werden. Die Schmelzpunkte liegen über den Schmelzpunkten der Polyalkenamere, die nach Verfahren des Standes der Technik hergestellt werden. Polyoctenamer, welches durch das erfindungsgemäße Verfahren erhalten wird, weist nach Temperung (180 °C über 20 h, Druck 1 mbar) einen Schmelzpunkt von mindestens 57 °C auf.

Das Cycloalken ist ausgewählt aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon. Bevorzugt sind Cyclopenten, Cyclohepten, Cycloocten, Cyclododecen und Cycloocta-1,5-dien. Besonders bevorzugt sind Cyclopenten, Cyclohepten, Cycloocten und Cyclododecen. Cycloocten ist auf Grund der Verfügbarkeit und Handhabbarkeit ein herausragendes Cycloalken. Vorzugsweise umfasst das Cycloalken Cycloocten, besonders bevorzugt besteht es aus diesem Monomer. Es können mehrere Cycloalkene eingesetzt werden, so dass Copolymere des Polyalkenamers entstehen. Die Cycloalkene können substituiert sein mit Alkylgruppen, Arylgruppen, Alkoxygruppen, Carbonylgruppen, Alkoxycarbonylgruppen und/oder Halogenatomen.

Die Polymerisationsreaktion wird in mindestens einem organischen Lösemittel durchgeführt. Geeignete Lösemittel sind insbesondere unpolare aromatische oder aliphatische Lösemittel, wobei aprotisch-unpolare, aliphatische Lösemitteln bevorzugt sind. Geeignet sind beispielsweise gesättigte, aliphatische Kohlenwasserstoffe wie Hexan, Heptan, Octan, Nonan, Decan, Dodecan, Cyclohexan, Cycloheptan oder Cyclooctan; aromatische Kohlenwasserstoffe wie Benzol, Toluol, Xylol oder Mesitylen; halogenierte Kohlenwasserstoffe wie Chlormethan, Dichlormethan, Chloroform oder Tetrachlorkohlenstoff; Ether wie Diethylether, Tetrahydrofuran oder 1,4-Dioxan, Ketone wie Aceton oder Methylethylketon, Ester wie Ethylacetat sowie Mischungen der zuvor genannten Lösemittel. Besonders bevorzugt wird das Lösemittel für die Reaktion ausgewählt aus der Gruppe bestehend aus Alkanen mit fünf bis zwölf Kohlenstoffatomen, noch mehr bevorzugt fünf bis acht Kohlenstoffatomen, und Toluol. Des Weiteren sind bevorzugt ausgewählt Tetrahydrofuran, Methylethylketon, Chlormethan, Dichlormethan, Chloroform oder Mischungen daraus. Hexan oder Toluol sind ganz besonders bevorzugt, wobei insbesondere Hexan ausgewählt wird. Der Gehalt an Lösemittel kann beispielsweise auf einen Wert von 20 bis 60 Gew.-%, vorzugsweise von 40 bis 60 Gew.-%, bezogen auf das Gesamtgewicht aus Cycloalken und Lösemittel, eingestellt werden.

Bei der Wahl der Lösemittel für die ringöffnende Metathese-Reaktion ist zu beachten, dass das Lösemittel nicht den Katalysator bzw. die katalytisch aktive Spezies deaktivieren sollte. Dies kann der Fachmann durch einfache Versuche oder durch Studium der Literatur erkennen.

Die Polymerisation wird vorzugsweise bei Temperaturen von 20 bis 100 °C, bevorzugt 30 bis 80 °C, durchgeführt. Der Druck in der Syntheseapparatur beträgt üblicherweise 1 bis 7 bar. Die Monomerkonzentration an Cycloalken beträgt während der Polymerisation 0,1 bis 60 Gew.-%, bevorzugt 20 bis 50 Gew.-%, jeweils bezogen auf das Gesamtgewicht aus Cycloalken und Katalysator sowie ggf. vorhandenen Reglern und Lösemittel.

Zur Katalyse der Polymerisation werden metallhaltige Katalysatoren eingesetzt. Geeignete Metalle sind Rhenium, Ruthenium, Osmium oder Mischungen daraus, wobei Ruthenium-haltige Katalysatoren bevorzugt sind. Besonders geeignet sind Metall-Carben-Komplexe, die einen N-heterocyclischen-Carben-Liganden tragen. Beispiele geeigneter Katalysatoren sind

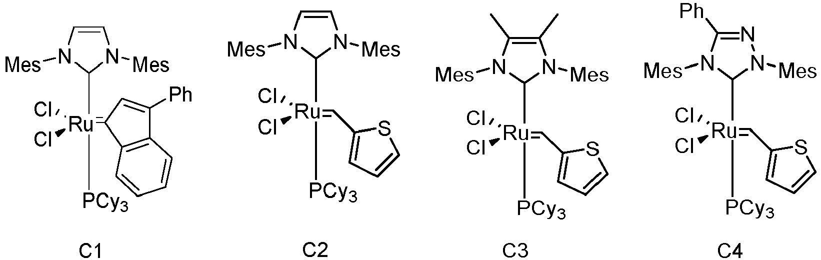

Im Stand der Technik übliche Wolfram-haltige Katalysatoren eignen sich für das vorliegende Verfahren nicht. Durch die Zugabe von Alkylvinylether bilden sich keine Fischer-Carbene und die Metalle des Katalysators lassen sich mittels Membranfiltration nicht wirksam abtrennen. Zudem ist der Schmelzpunkt bspw. von Polyoctenamer, welches mittel Wolfram-Katalysator hergestellt wird, unterhalb von 57 °C.

Zum Abbruch der Polymerisation wird Alkylvinylether bzw. Alkylvinylsulfid gegeben. Geeignete Alkylvinylether werden vorzugsweise aus C1- bis C6-Alkylvinylethern und ihren Mischungen und bevorzugt aus Methylvinylether, Ethylvinylether, Propylvinylether, Butylvinylether und ihren Mischungen ausgewählt. Bevorzugt sind Ethylvinylether, Butylvinylether und ihre Mischungen. Geeignete Alkylvinylsulfide werden vorzugsweise aus C1- bis C6-Alkylvinylsulfiden und ihren Mischungen und bevorzugt aus Methylvinylsulfid, Ethylvinylsulfid, Propylvinylsulfid, Butylvinylsulfid und ihren Mischungen ausgewählt. Bevorzugt sind Ethylvinylsulfid, Propylvinylsulfid und ihre Mischungen.

Die Stoffmenge an Alkylvinylether bzw. Alkylvinylsulfid entspricht mindestens der Stoffmenge an Katalysator, vorzugsweise Ruthenium-Katalysator, bevorzugt mindestens der zehnfachen Stoffmenge.

Nach der Zugabe von Alkylvinylether bzw. Alkylvinylsulfid wird mindestens eine Verbindung A zugegeben. Die Verbindung A weist vorzugsweise 1 bis 20 C-Atome auf, wobei ungesättigte Verbindungen mindestens zwei und cyclische Verbindungen mindestens drei C-Atome haben. Die Verbindung A kann die Merkmale i) oder ii) oder eine Kombination von i) und ii) aufweisen. Es ist bevorzugt, dass die Verbindung A zumindest das Merkmal ii) umfasst. Eine Verbindung A mit den Merkmalen i) kann gesättigt oder ungesättigt sein, sie kann aliphatisch, einschließlich cycloaliphatisch, oder aromatisch sein.

Bevorzugte funktionelle Gruppen sind primäre Aminogruppen, sekundäre Aminogruppen, Carboxamidogruppen, Nitrilgruppen, primäre Ketiminogruppen, sekundäre Ketiminogruppen, primäre Aldiminogruppen, sekundäre Aldiminogruppen, Carbonylgruppen, Aminoxidgruppen, Sulfinylgruppen, Phosphinogruppen und Phosphanoxidgruppen, wobei primäre Aminogruppen, sekundäre Aminogruppen und Nitrilgruppen besonders bevorzugt sind.

Geeignete Verbindungen A, die eine funktionelle Gruppe umfassen, sind i) Amine oder Diamine mit gesättigten oder ungesättigten aliphatischen Ketten von 1 bis 12 Kohlenstoffatomen oder mit aromatischen Resten von 5 bis 14 Kohlenstoffatomen; Nitrile mit einer gesättigten oder ungesättigten aliphatischen Kette oder mit einem aromatischen Rest von 1 bis 8 Kohlenstoffatomen; Ketone oder Diketone mit gesättigten oder ungesättigten aliphatischen Ketten von 3 bis 8 Kohlenstoffatomen; Sulfoxide mit gesättigten oder ungesättigten aliphatischen Ketten von 1 bis 4 Kohlenstoffatomen; Phosphine, Phosphanoxide oder Phosphonsäuren oder deren Ester mit gesättigten oder ungesättigten aliphatischen Ketten von 1 bis 9 Kohlenstoffatomen oder mit aromatischen Resten von 5 bis 14 Kohlenstoff-atomen; sowie Aminosäuren.

Eine bevorzugte Verbindung mit Merkmal ii) umfasst einen gesättigten oder ungesättigten aliphatischen heterocyclischen Ring mit 3 bis 14 Ringatomen, ganz besonders bevorzugt mit 5 oder 6 Ringatomen. Eine weitere bevorzugte Verbindung mit Merkmal ii) umfasst einen aromatischen heterocyclischen Ring mit 5 bis 14 Ringatomen, ganz besonders bevorzugt mit 5 oder 6 Ringatomen.

Besonders bevorzugt sind Verbindungen A, die einen aromatischen heterocyclischen Ring aufweisen, wobei stickstoffhaltige aromatische Ringe ganz besonders bevorzugt sind.

Geeignete Verbindungen A sind beispielsweise Triethylamin, Tetramethylethylendiamin, 2-Aminophenol, Anilin, Acetonitril, Propionitril, Benzonitril, Acetylaceton, Dimethylsulfoxid, Tricyclohexylphosphin, Triethylphosphit, Triphenylphosphin, Cystein, N-Methylimidazolin, Imidazolin, N-Methylimidazol, Imidazol, Pyridin, Pyrazin, Furan, Thiophen, Oxazol, Thioxazol, 2-Mercaptopyridin, 2-Mercaptopyridin-3-carbonsäure geeignet. Besonders bevorzugte Verbindungen A sind Acetonitril, 2-Aminophenol, Pyridin, N-Methylimidazol oder Mischungen davon.

Die Stoffmenge an Verbindung A entspricht mindestens der Stoffmenge an Katalysator, vorzugsweise Ruthenium-Katalysator, bevorzugt mindestens der zehnfachen Stoffmenge.

Nach der Zugabe von Alkylvinylether bzw. Alkylvinylsulfid und Verbindung A wird der Katalysator in Form eines Addukts von der Polyalkenamer-haltigen Produktmischung mittels Membranfiltration abgetrennt. Hierbei ist es bevorzugt, dass die aufgearbeitete Produktmischung nach der durchgeführten Membranfiltration weniger als 50 ppm Rhenium, weniger als 50 ppm Ruthenium und weniger als 50 ppm Osmium enthält. Besonders bevorzugt sind weniger als 20 ppm Rhenium, weniger als 20 ppm Ruthenium und weniger als 20 ppm Osmium. Ganz besonders bevorzugt ist der Gehalt der drei Metalle in Summe geringer als 10 ppm, mehr bevorzugt geringer als 5 ppm und insbesondere geringer als 2 ppm. Die Angaben beziehen sich jeweils auf die aufgearbeitete, nach 20 h bei 180 °C und 1 mbar getemperte Polyalkenamer-haltigen Zusammensetzung.

Die Produktmischung umfasst Polyalkenamer und Katalysator-Alkylvinylether-Verbindung A-Addukt bzw. Katalysator-Alkylvinylsulfid-Verbindung A-Addukt. Zudem können nicht abreagiertes Monomer und ggf. Oligomere enthalten sein. Oligomere sind Polymere mit einer molekularen Masse unterhalb von 3000 g/mol. Die Produktmischung wird zur Aufarbeitung einer Filtrationsmembran zugeführt. Diese Art der Membranfiltration kann beispielweise eine Ultrafiltration oder eine Nanofiltration sein, vorzugsweise eine Ultrafiltration. In diesem Schritt werden die kleineren Moleküle (Monomere, Oligomere und Katalysator-Alkylvinylether-Verbindung A-Addukt bzw. Katalysator-Alkylvinylsulfid-Verbindung A-Addukt) von dem Polymer abgetrennt, wobei sie durch die Membran permeieren. Dabei wird frisches Lösemittel zudosiert, um die kleinen Komponenten durch die Membran zu "waschen". Auf diese Weise gelangen die Monomere, Oligomere und Katalysator-Alkylvinylether-Addukt bzw. Katalysator-Alkylvinylsulfid-Addukt in das Permeat und das Polyalkenamer verbleibt im Retentat.

Für die Membranfiltration kann ein Lösemittel ausgewählt werden, das auch für die Polymerisation geeignet ist. Das Lösemittel der Membranfiltration kann zu dem Lösemittel, in dem die Polymerisation durchgeführt worden ist, gleich oder verschieden sein. Vorzugsweise wird für Polymerisation und Membranfiltration das gleiche Lösemittel eingesetzt. Damit werden die Schritte a), b) und c) jeweils in einem organischen Lösemittel durchgeführt, so dass die Polyalkenamer-haltige Produktmischung jeweils in Lösung vorliegt.

Für die Membranfiltration werden üblicherweise 0 bis 10 Waschvolumen (1 Waschvolumen = 1 Feedvolumen), vorzugsweise 1 bis 5 Waschvolumen, eingesetzt. Die so erhaltene Polymerlösung kann weiterverarbeitet werden (bspw. Trocknung, Compoundierung etc.).

Die Membranabtrennung kann sowohl durch Ultrafiltration aber auch durch eine Nanofiltration erfolgen. Für die Ultrafiltration eignen sich die folgenden Bedingungen: Anteil an Polymer 0,1 bis 70 Gew.-%, bezogen auf die Produktmischung, Temperatur von 20 bis 100 °C, bevorzugt 30 bis 80 °C und Druck von 0 bis 6 bar. Für die Nanofiltration eignen sich die folgenden Bedingungen: Anteil an Polymer 0,1 bis 70 Gew.-%, bezogen auf die Produktmischung, Temperatur von 20 bis 100 °C, bevorzugt 30 bis 80 °C und Druck von 10 bis 60 bar.

Das Permeat der Membranfiltration kann einer Nanofiltrationsmembran zugeführt werden, um das Katalysator-Alkylvinylether-Addukt bzw. Katalysator-Alkylvinylsulfid-Addukt und die abgetrennten Oligomere zurückzugewinnen. Das Retentat der Nanofiltration, umfassend das Addukt, kann zur Polymerisationsreaktion zurückgeführt werden. Gegebenenfalls ist der Katalysator zuvor zu reaktivieren. Durch die Zurückführung wird der Verbrauch an frischem Katalysator im Polymerisationsschritt erheblich reduziert. Das Permeat dieser Nanofiltration, das vorwiegend frei von Oligomeren und Addukt ist, kann als Waschlösemittel in die Ultrafiltration zurückgeführt werden. Dadurch kann der Verbrauch an frischem Lösemittel erheblich reduziert werden. Alternativ kann das Lösemittel destilliert und erneut eingesetzt werden.

Typische molekulare Trenngrenzen der Ultrafiltrationsmembran, bei der 90 % der Moleküle einer bestimmten Molmasse zurückgehalten werden, liegen zwischen 1000 bis 100000 g/mol (T. Melin, R. Rautenbach, Membranverfahren: Grundlagen der Modul- und Anlagenauslegung, 3rd ed., Springer 2007, S. 313). Die Trenngrenze der Nanofiltrationsmembranen liegt zwischen 100 und 2000 g/mol (T. Melin, R. Rautenbach, Membranverfahren: Grundlagen der Modul- und Anlagenauslegung, 3rd ed., Springer 2007, S. 286, Diagramm). Demnach kann eine geeignete Membran Nano- oder Ultrafiltrationsmembran sein. Vorzugsweise werden Membranen mit Trenngrenzen im Bereich von 1000 bis 50000 g/mol eingesetzt. Eine geeignete Membran mit gewünschter Trenneigenschaft ist im verwendeten Lösemittel oder Lösemittelgemisch stabil.

Die Membran der Membranfiltration weist vorzugsweise eine Trennschicht aus Polymer, Glas, Metall, Keramik oder deren Gemischen auf.

Geeignete anorganische Membranen werden ausgewählt aus porösen metallischen Materialien, Keramikmembranen oder Polymerkeramikmembranen, welche jeweils aus Aluminiumoxid, Titaniumdioxid, Zirkondioxid, Siliciumdioxid, Titaniumnitrit, Siliziumcarbid oder deren Mischungen und Modifikationen ausgewählt sein könne. Derartige Keramikmembranen werden beispielsweise von Inopor GmbH, PALL Corporation oder TAMI Industries angeboten. Ein Überblick über die Anbieter ist in R. Mallada, M, Inorganic Membranes: Synthesis, Characterization and Applications, Elsevier, 2008, S. 182, Tabelle 6.1, gegeben. Wegen des höheren Verhältnisses der aktiven Membranfläche zum Anlagevolumen sind Membranen in Form von Spiralwickelmodulen der Polymermembranen besonders bevorzugt.

Bevorzugt sind lösemittelstabile-Polymermembranen, wie sie beispielsweise in US 2012/0123079, WO 2010/142979, US 2012/0279922 oder EP 0943645B1 beschrieben werden.

Geeignete Membrantrennschichten sind zum Beispiel in WO 2010/142979, US 2012/0279922 oder EP 0943645B1 beschrieben. Geeignete Polymere sind insbesondere für organische Lösemittel geeignet. Die Membrantrennschichten werden vorzugsweise ausgewählt aus Polydimethysiloxanen (PDMS) oder deren Modifikationen (insbesondere Acrylat-Modifikationen), Polyacrylonitrilen (PAN), Polyimiden (PI), Polyetheretherketonen (PEEK), Polyvinylidenfluoriden (PVDF), Polyamiden (PA), Polyamidimiden (PAD), Polyethersulfonen (PES), Polybenzimidazolen (PBI), sulfonierte Polyetheretherketonen (SPEEK), Polyethylenen (PE) und Polypropylenen (PP). Weniger bevorzugt sind Membranen, die für wässrige optimiert sind. Hierzu zählen meist Polymere wie Celluloseacetat (CA), Polyethersulfone (PES) und Polysulfone (PS).

Geeignete Membranen aus vernetzten Siliconacrylaten sind beispielsweise in US 2015/0328619 beschrieben.

In einer besonderen Ausführungsform der Erfindung wird die trennaktive Schicht der Membran ausgewählt aus vernetzten Siliconacrylaten, Polydimethylsiloxan (PDMS) und Polyimid.

Die Einstellung der Parameter wie Auswahl des Materials der Membrantrennschicht, Temperatur, Druck und Membranoberfläche können vom Fachmann durch geeignete Vorversuche vorgenommen werden. Vorhersagemodelle für die Performance der eingesetzten Membranen existieren derzeit noch nicht.

Nach der Membranabtrennung kann das Lösemittel, in der die Polyalkenamer-haltige Zusammensetzung gelöst ist, entfernt werden. Dies kann beispielsweise durch Erhitzen oder Verringerung des Drucks, beispielsweise mittels Vakuum-Entgasung, vorgenommen werden. Alternativ oder zusätzlich kann eine Trocknung, beispielsweise unter vermindertem Druck und/ oder erhöhter Temperatur, durchgeführt werden, um das Lösemittel zu entfernen. Der erhaltene Feststoff kann zu Partikeln granuliert, beispielsweise durch Stranggranulierung oder Unterwassergranulierung, oder pulverisiert werden, beispielsweise durch Sprühtrocknung oder Vermahlung.

Das erfindungsgemäße Verfahren kann kontinuierlich oder diskontinuierlich durchgeführt werden.

Das Polyoctenamer weist vorzugsweise ein gewichtsmittleres Molekulargewicht (Mw) von 3000 g/mol bis 500000 g/mol, bevorzugt von 2000 g/mol bis 400000 g/mol und besonders bevorzugt von 5000 bis 350000 g/mol. Die Messmethode ist in den Beispielen angegeben.

Das gewünschte Molgewicht kann beispielsweise in Gegenwart mindestens eines Reglers eingestellt werden, der den Kettenaufbau abbrechen lässt. Geeignete Regler sind literaturbekannt und sind beispielsweise acyclische Alkene mit einer oder mehreren nichtkonjugierten Doppelbindungen, die end- oder innenständig liegen können und die vorzugsweise keine Substituenten tragen. Solche Verbindungen sind z.B. Pent-1-en, Hex-1-en, Hept-1-en, Oct-1-en oder Pent-2-en. Alkylvinylether fallen nicht unter diese Definition, da diese nicht als Regler nutzbar sind. Dies ist damit zu erklären, dass Alkylvinylether den Katalysator desaktivieren. Alternativ können cyclische Verbindungen als Regler eingesetzt werden, die in ihrer Seitenkette eine Doppelbindung aufweisen, wie z.B. Vinylcyclohexen.

Das cis/trans-Verhältnis der Cycloalkenamere kann durch dem Fachmann geläufige Methoden eingestellt werden. Beispielsweise ist das Verhältnis abhängig von Katalysatoren, Lösemitteln, Rührintensität oder Temperatur oder Reaktionszeit. Vorzugsweise beträgt der trans-Gehalt mindestens 55 %, bevorzugt mindestens 70 % und besonders bevorzugt 75 bis 85 %. Das cis-/trans-Verhältnis wird mittels ¹H-NMR in Deuterochloroform ermittelt.

Weiterhin wird die Verwendung mindestens einer erfindungsgemäß hergestellten Polyalkenamer-haltigen Zusammensetzung in Reifen, Gummiartikeln, Klebstoffen oder Verpackungsmaterialien, wobei die Verpackungsmaterialien vorzugsweise für Lebensmittel verwendet werden, beschrieben.

Ein weiterer Gegenstand ist Polyoctenamer mit einem Schmelzpunkt von mindestens 57 °C, vorzugsweise 57 °C bis 60 °C, bevorzugt 58 °C bis 60 °C, besonders bevorzugt 59 °C bis 60 °C, nach Temperung bei einer Temperatur von 180 °C für eine Dauer von 20 h und 1 mbar Druck. Bevorzugt wird das erfindungsgemäße Polyoctenamer nach dem erfindungsgemäßen Verfahren hergestellt.

### Beispiele

### Bestimmungsmethoden

### Gewichtsmittleres Molekulargewicht

Die Bestimmung des Molekulargewichts erfolgte mittels Gelpermeationschromatographie (GPC) angelehnt an DIN 55672-1:2016-03. Die Messungen wurden mit einer GPC-Anlage der Fa. Knauer Wissenschaftliche Geräte GmbH durchgeführt. Das Polymer wurde als Lösung in Tetrahydrofuran (c = 5 g/L, Injektionsvolumen 100 µL) auf einer SDV-Säule (30 cm, 5 µm, linear) mit Vorsäule (SDV 5 cm, 5 µm, 100 Å) bei 23 °C und einem Fluss von 1 mL/min gemessen. Die Berechnung der Molmassenmittelwerte erfolgte mittels der Streifenmethode gegen Polystyrolstandards. Zur Auswertung wurde die Software WinGPC UniChrom (Build 5350) von PSS Polymer Standards Service GmbH eingesetzt.

### Schmelzpunkt und Schmelzenthalpie

Die Bestimmung des Schmelzpunkts und der Schmelzenthalpie erfolgte mittels dynamischer Differenzkalorimetrie (DSC). Polymerproben zwischen 5 und 10 mg wurden gemessen. Die Messungen wurden auf einem DSC-7 Gerät der Firma PerkinElmer mit Stickstoff 5.0 mit 20 mL/min als Spülgas durchgeführt. Das Messprogramm enthielt eine erste Aufheizung von -90°C bis 80°C (Aufheizrate 20 K/min), eine Abkühlung von 80°C auf -90°C (Abkühlrate 20 K/min) und eine zweite Aufheizung von 90°C auf 80°C (Aufheizrate 20 K/min). Der Schmelzpunkt und die Schmelzenthalpie der Polyalkenamere wurden anhand der zweiten Aufheizung bestimmt.

### Elementarspurenanalyse

Die Bestimmungen der Spurenelemente aus dem Katalysator im Polyalkenamer wurden durch ICPMS quantitativ durchgeführt. 0,1 - 0,2 g Probe wurden in 10 ml einer 65 Gew.-%igen HNO₃ und 2 ml Wasser unter max. ca. 130 bar Druck bei max. ca. 300 °C aufgeschlossen. Der Aufschluss wurde im geschlossenen System bei max. ca. 95 °C abgedampft, mit 0,5 ml HNO₃ gelöst und auf 20 ml mit Wasser aufgefüllt. Der Gehalt an verschiedenen Elemente in der Lösung wurde quantitativ mit einem Quadrupol ICPMS "ICAP Q" der Firma Thermo Fisher gemessen.

### Beispiel 1A: Synthese von Polyoctenamer in Heptan mit Wolfram/Aluminium Katalysatorsystem

In einem trockenen 2 L-Glasreaktor mit mechanischem Rührer wurden 585 mL Heptan, 100 g Cycloocten (COE) und 0,34 g Vinylcyclohexen (VCH) unter Argon eingefüllt. Das Reaktionsgemisch wurde bis 50 °C aufgeheizt und 0,4 mL einer Lösung von Ethylaluminiumdichlorid (20 Gew.-%) in Heptan wurde zugegeben. Anschließend wurde 1 mL einer Lösung von Wolframhexachlorid/Propylenoxid (1/3 mol/mol) in Toluol (2,8 Gew.-% Wolfram) langsam zudosiert. Ein Temperaturanstieg von 5 °C wurde beobachtet und das Reaktionsgemisch wurde deutlich viskoser. Der Inhalt des Reaktors wurde dann abgefüllt und eine Lösung von 20 Gew.-% Polyoctenamer in Heptan wurde erhalten.

### Beispiel 1B (Vergleichsbeispiel): Membranaufreinigung von Polyoctenamer in Heptan mit Wolfram/Aluminium Katalysatorsystem

1,25 L Lösung von 20 Gew.-% Polyoctenamer in Heptan (nach dem Beispiel 1A hergestellt) wurde weiter mit 3,75 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Bei einer Diafiltration wird die Membran als eine halbdurchlässige Barriere angewendet, wobei die große Moleküle (Polymer) zurückgehalten werden und die kleine (Verunreinigungen) durch die Membran mittels Lösemittelzugabe ausgewaschen werden. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigte Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 1,5 g weißer Feststoff wurde erhalten. Das NMR-Spektrum des Feststoffs entsprach die erwartete Struktur eines Polyoctenamers, das 0,25 mol-% Vinylendgruppen und 0,30 mol-% Cyclohexenendgruppen enthielt.

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH₂-CH=CH-CH2), 5.38-5.34 (m, 2H, -CH-CH=CH-CH2), 4.95 (m, 2H, CH2=CH-CH2-). Cis/Trans Verhältnis der Doppelbindungen: 22 / 78
Schmelzpunkt: 54 °C
Schmelzenthalpie: 75 J/g
Molmasse M_{w}: 135.000 g/mol
Oligomeranteil (M < 3000 g/mol): 3,8%

Eine Elementarspurenanalyse zeigte, dass das Polymer 250 ppm Wolfram, 125 ppm Aluminium und 110 ppm Chlor enthielt.

### Beispiel 2A: Synthese von Polyoctenamer in Heptan mit Ru-Katalysator

In einem trockenen 2 L-Glasreaktor mit mechanischem Rührer wurden 1L Heptan, 300 g Cycloocten (COE) und 1,03 g Vinylcyclohexen (VCH) unter Argon eingefüllt. Das Reaktionsgemisch wurde bis 70 °C aufgeheizt und eine Lösung von 14,4 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 3,27 mL Toluol wurde zugegeben. Ein Temperaturanstieg von 16 °C wurde beobachtet und das Reaktionsgemisch wurde deutlich viskoser. Der Inhalt des Reaktors wurde dann abgefüllt und eine Lösung von 30 Gew.-% Polyoctenamer in Heptan wurde erhalten.

### Beispiel 2B (Vergleichsbeispiel): Membranaufreinigung von Polyoctenamer in Heptan mit Ru-Katalysator

0,8 L Lösung von 30 Gew.-% Polyoctenamer in Heptan (nach dem Beispiel 2A hergestellt) wurde mit 4,2 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,30 mol-% Vinylendgruppen und 0,32 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 115.000 g/mol
Oligomeranteil (M < 3000 g/mol): 7%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil der erwarteten Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 20 / 80
Schmelzpunkt: 30 °C
Schmelzenthalpie: 58 J/g

Die deutlich niedrigeren Schmelzpunkt- und Schmelzenthalpie-Werte im Vergleich zur Trocknung bei 80 °C zeigten, dass das Polymer bei einer Temperatur von 180 °C instabil war. Die Polymerlösung enthielt feine graue Partikeln, die die Membran verblockt haben, so dass ihre weitere Anwendung nicht möglich war. Die grauen Partikel waren vermutlich anorganische rutheniumhaltige Verbindungen, die unlöslich waren und nach der Trocknung im Polymer blieben.

### Beispiel 2C (Vergleichsbeispiel): Membranaufreinigung von Polyoctenamer in Heptan mit Ru-Katalysator und Zugabe von Butylvinylether (keine Zugabe von Verbindung A)

In einem trockenen 2 L-Glasreaktor mit mechanischem Rührer wurden 1 L Heptan, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 19 °C wurde beobachtet und das Reaktionsgemisch wurde deutlich viskoser. 15 Min nach Katalysatorzugabe wurde 2,7 g Butylvinylether zugegeben. Nach 30 Min bei 50 °C wurde der Inhalt des Reaktors abgefüllt und eine Lösung von 30 Gew.-% Polyoctenamer in Heptan wurde erhalten.

0,8 L Lösung von 30 Gew.-% Polyoctenamer in Heptan wurde mit 4,2 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,30 mol-% Vinylendgruppen und 0,32 mol-% Cyclohexenendgruppen enthielt. Cis/Trans Verhältnis der Doppelbindungen: 21 / 79.

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 83 J/g
Molmasse M_{w}: 100.000 g/mol
Oligomeranteil (M < 3000 g/mol): 10%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil der erwarteten Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 22 / 78
Schmelzpunkt: 49°C
Schmelzenthalpie: 71 J/g

Die niedrigeren Schmelzpunkt- und Schmelzenthalpie-Werte im Vergleich zur Trocknung bei 80 °C zeigten, dass das Polymer bei einer Temperatur von 180 °C instabil war. Eine Elementarspurenanalyse zeigte, dass das Polymer 3,5 ppm Ruthenium enthielt.

Der rutheniumhaltige Katalysator wurde nur zum Teil entfernt. Offensichtlich war die Zugabe von Butylvinylether nicht ausreichend, um den Katalysator während der 3 Stunden vor der Membranfiltration zu stabilisieren: es haben sich vermutlich anorganische rutheniumhaltige Verbindungen gebildet, die unlöslich waren und nach der Trocknung im Polymer blieben.

### Beispiel 3A (Vergleichsbeispiel): Synthese von Polyoctenamer in Heptan mit Ru-Katalysator und Zugabe Butylvinylether dann 2-Aminophenol

In einem trockenen 2 L-Glasreaktor mit mechanischem Rührer wurden 1 L Heptan, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 19 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,3 g 2-Aminophenol (in 10mL Ethanol gelöst) wurde zugegeben. Nach 30 Min bei 50 °C wurde der Inhalt des Reaktors abgefüllt und eine Lösung von 30 Gew.-% Polyoctenamer in Heptan wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,30 mol-% Vinylendgruppen und 0,28 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 60 °C
Schmelzenthalpie: 82 J/g
Molmasse M_{w}: 104.000 g/mol
Oligomeranteil (M < 3000 g/mol): 2,5%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 25 / 75
Schmelzpunkt: 29 °C
Schmelzenthalpie: 65 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,6 ppm Ruthenium enthielt.

### Beispiel 3B (erfindungsgemäß): Membranaufreinigung von Polyoctenamer in Heptan mit Ru-Katalysator und Zugabe Butylvinylether dann 2-Aminophenol

0,8 L Lösung von 30 Gew.-% Polyoctenamer in Heptan (nach dem Beispiel 3A hergestellt) wurde weiter mit 4,2 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,29 mol-% Vinylendgruppen und 0,26 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 81 J/g
Molmasse M_{w}: 111.000 g/mol
Oligomeranteil (M < 3000 g/mol): 0,8 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte.

Eine Elementarspurenanalyse zeigte, dass das Polymer lediglich 0,2 ppm Ruthenium enthielt. Außerdem wurden keine unlöslichen Partikel in der Polymerlösung beobachtet.

### Beispiel 4A (Vergleichsbeispiel): Synthese von Polyoctenamer in Heptan mit Ru-Katalysator und Zugabe Butylvinylether dann N-Methylimidazol

In einem trockenen 2 L-Glasreaktor mit mechanischem Rührer wurden 1 L Heptan, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 15 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,22 g N-Methylimidazol wurde zugegeben. Nach 30 Min bei 50 °C wurde der Inhalt des Reaktors abgefüllt und eine Lösung von 30 Gew.-% Polyoctenamer in Heptan wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,31 mol-% Vinylendgruppen und 0,28 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 99.900 g/mol
Oligomeranteil (M < 3000 g/mol): 2%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 24 / 76
Schmelzpunkt: 49 °C
Schmelzenthalpie: 70 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,4 ppm Ruthenium enthielt.

### Beispiel 4B (erfindungsgemäß): Membranaufreinigung von Polyoctenamer in Heptan mit Ru-Katalysator und Zugabe Butylvinylether dann N-Methylimidazol

0,8 L Lösung von 30 Gew.-% Polyoctenamer in Heptan (nach dem Beispiel 4A hergestellt) wurde weiter mit 4,2 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Heptan zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,30 mol-% Vinylendgruppen und 0,26 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 104.400 g/mol
Oligomeranteil (M < 3000 g/mol): 0,7 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 0,3 ppm Ruthenium enthielt. Außerdem wurden keine unlöslichen Partikel in der Polymerlösung beobachtet.

### Beispiel 5A (Vergleichsbeispiel): Synthese von Polyoctenamer in Toluol mit Ru-Katalysator und Zugabe Butylvinylether dann Acetonitril

In einem trockenen 2 L-Glasreaktor mit mechanischem Rührer wurden 800 mL Toluol, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 19 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,11 g Acetonitril wurde zugegeben. Nach 30 Min bei 50 °C wurde der Inhalt des Reaktors abgefüllt und eine Lösung von 30 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,29 mol-% Vinylendgruppen und 0,36 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 105.000 g/mol
Oligomeranteil (M < 3000 g/mol): 3%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 25 / 75
Schmelzpunkt: 35 °C
Schmelzenthalpie: 63 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,5 ppm Ruthenium enthielt.

### Beispiel 5B (erfindungsgemäß): Membranaufreinigung von Polyoctenamer in Toluol mit Ru-Katalysator und Zugabe Butylvinylether dann Acetonitril

0,8 L Lösung von 30 Gew.-% Polyoctenamer in Toluol (nach dem Beispiel 5A hergestellt) wurde weiter mit 4,2 L Toluol auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Toluol zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,26 mol-% Vinylendgruppen und 0,34 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 111.000 g/mol
Oligomeranteil (M < 3000 g/mol): 0,95 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 2,1 ppm Ruthenium enthielt. Außerdem wurden keine unlöslichen Partikel in der Polymerlösung beobachtet.

### Beispiel 6A (Vergleichsbeispiel): Synthese von Polyoctenamer in Toluol mit Ru-Katalysator und Zugabe Butylvinylether dann 2-Aminophenol

In einem trockenen 2 L-Glasreaktor mit mechanischem Rührer wurden 800 mL Toluol, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 22 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,3 g 2-Aminophenol (in 10 mL Ethanol gelöst) wurde zugegeben. Nach 30 Min bei 50 °C wurde der Inhalt des Reaktors abgefüllt und eine Lösung von 30 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,26 mol-% Vinylendgruppen und 0,28 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 80 J/g
Molmasse M_{w}: 103.600 g/mol
Oligomeranteil (M < 3000 g/mol): 1,7%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 25 / 75
Schmelzpunkt: 30 °C
Schmelzenthalpie: 67 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,5 ppm Ruthenium enthielt.

### Beispiel 6B (erfindungsgemäß): Membranaufreinigung von Polyoctenamer in Toluol mit Ru-Katalysator und Zugabe Butylvinylether dann N-Methylimidazol

0,8 L Lösung von 30 Gew.-% Polyoctenamer in Toluol (nach dem Beispiel 6A hergestellt) wurde weiter mit 4,2 L Toluol auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Toluol zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,25 mol-% Vinylendgruppen und 0,26 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 81 J/g
Molmasse M_{w}: 109.000 g/mol
Oligomeranteil (M < 3000 g/mol): 0,5 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 0,7 ppm Ruthenium enthielt. Außerdem wurden keine unlöslichen Partikel in der Polymerlösung beobachtet.

### Beispiel 7A (Vergleichsbeispiel): Synthese von Polyoctenamer in Toluol mit Ru-Katalysator und Zugabe Butylvinylether dann N-Methylimidazol

In einem trockenen 2 L-Glasreaktor mit mechanischem Rührer wurden 800 mL Toluol, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 20 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,22 g N-Methylimidazol wurde zugegeben. Nach 30 Min bei 50 °C wurde der Inhalt des Reaktors abgefüllt und eine Lösung von 30 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,32 mol-% Vinylendgruppen und 0,32 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 80 J/g
Molmasse M_{w}: 107.500 g/mol
Oligomeranteil (M < 3000 g/mol): 2%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 24 / 76
Schmelzpunkt: 47 °C
Schmelzenthalpie: 66 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,8 ppm Ruthenium enthielt.

### Beispiel 7B (erfindungsgemäß): Membranaufreinigung von Polyoctenamer in Toluol mit Ru-Katalysator und Zugabe Butylvinylether dann N-Methylimidazol

0,8 L Lösung von 30 Gew.-% Polyoctenamer in Toluol (nach dem Beispiel 7A hergestellt) wurde weiter mit 4,2 L Toluol auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Toluol zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,30 mol-% Vinylendgruppen und 0,29 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 60 °C
Schmelzenthalpie: 81 J/g
Molmasse M_{w}: 113.000 g/mol
Oligomeranteil (M < 3000 g/mol): 0,5 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 0,3 ppm Ruthenium enthielt. Außerdem wurden keine unlöslichen Partikel in der Polymerlösung beobachtet.

### Beispiel 8A (Vergleichsbeispiel): Synthese von Polyoctenamer in Toluol mit Ru-Katalysator und Zugabe Ethylvinylsulfid dann N-Methylimidazol

In einem trockenen 2 L-Glasreaktor mit mechanischem Rührer wurden 800 mL Toluol, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 21 °C wurde beobachtet und das Reaktionsgemisch wurde deutlich viskoser. 15 Min nach Katalysatorzugabe wurde 2,4 g Ethylvinylsulfid zugegeben. Das Reaktionsgemisch wurde 15 Min weiter gerührt und 0,22 g N-Methylimidazol wurde zugegeben. Nach 30 Min bei 50 °C wurde der Inhalt des Reaktors abgefüllt und eine Lösung von 30 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,33 mol-% Vinylendgruppen und 0,29 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 81 J/g
Molmasse M_{w}: 114.700 g/mol
Oligomeranteil (M < 3000 g/mol): 1,2%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 22 / 78
Schmelzpunkt: 50 °C
Schmelzenthalpie: 72 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,6 ppm Ruthenium enthielt.

### Beispiel 8B (erfindungsgemäß): Membranaufreinigung von Polyoctenamer in Toluol mit Ru-Katalysator und Zugabe Ethylvinylsulfid dann N-Methylimidazol

0,8 L Lösung von 30 Gew.-% Polyoctenamer in Toluol (nach dem Beispiel 8A hergestellt) wurde weiter mit 4,2 L Toluol auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Toluol zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,32 mol-% Vinylendgruppen und 0,28 mol-% Cyclohexenendgruppen enthielt. Cis/Trans Verhältnis der Doppelbindungen: 21 / 79

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 81 J/g
Molmasse M_{w}: 113.800 g/mol
Oligomeranteil (M < 3000 g/mol): 0,4 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 1,2 ppm Ruthenium enthielt. Außerdem wurden keine unlöslichen Partikel in der Polymerlösung beobachtet.

### Beispiel 9A (Vergleichsbeispiel): Synthese von Polyoctenamer in Toluol mit Ru-Katalysator und Zugabe Butylvinylether dann Pyridin

In einem trockenen 2 L-Glasreaktor mit mechanischem Rührer wurden 800 mL Toluol, 300 g Cycloocten (COE) und 1,03 g Vinylcyclohexen (VCH) unter Argon eingefüllt. Das Reaktionsgemisch wurde bis 50 °C aufgeheizt und eine Lösung von 24 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 5,4 mL Toluol wurde zugegeben. Ein Temperaturanstieg von 18 °C wurde beobachtet und das Reaktionsgemisch wurde deutlich viskoser. 15 Min nach Katalysatorzugabe wurde 2,7 g Butylvinylether zugegeben. Das Reaktionsgemisch wurde 15 Min weiter gerührt und 0,22 g Pyridin wurde zugegeben. Nach 30 Min bei 50 °C wurde der Inhalt des Reaktors abgefüllt und eine Lösung von 30 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,28 mol-% Vinylendgruppen und 0,30 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 108.000 g/mol
Oligomeranteil (M < 3000 g/mol): 1,7%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden. Cis/Trans Verhältnis der Doppelbindungen: 25 / 75
Schmelzpunkt: 29 °C
Schmelzenthalpie: 59 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 8,4 ppm Ruthenium enthielt.

### Beispiel 9B (erfindungsgemäß): Membranaufreinigung von Polyoctenamer in Toluol mit Ru-Katalysator und Zugabe Butylvinylether dann Pyridin

0,8 L Lösung von 30 Gew.-% Polyoctenamer in Toluol (nach dem Beispiel 9A hergestellt) wurde weiter mit 4,2 L Toluol auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 15 L frisches Toluol zudosiert wurde (3 Waschvolumen im Verhältnis zum Ausgangsvolumen der Polymerlösung). Nach dieser Aufreinigung wurde 5 L Polymerlösung als Retentat erhalten. Außerdem wurde 15 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,26 mol-% Vinylendgruppen und 0,28 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 120.000 g/mol
Oligomeranteil (M < 3000 g/mol): 0,5 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 1,0 ppm Ruthenium enthielt. Außerdem wurden keine unlöslichen Partikel in der Polymerlösung beobachtet.

### Beispiel 10A: Synthese von Polyoctenamer in Heptan mit Wolfram/Aluminium Katalysatorsystem und Zugabe Butylvinylether dann N-Methylimidazol

In einem trockenen 2 L-Glasreaktor mit mechanischem Rührer wurden 585 mL Heptan, 100 g Cycloocten (COE) und 0,34 g Vinylcyclohexen (VCH) unter Argon eingefüllt. Das Reaktionsgemisch wurde bis 50 °C aufgeheizt und 0,4 mL einer Lösung von Ethylaluminiumdichlorid (20 Gew.-%) in Heptan wurde zugegeben. Anschließend wurde 1 mL einer Lösung von Wolframhexachlorid/Propylenoxid (1/3 mol/mol) in Toluol (2,8 Gew.-% Wolfram) langsam zudosiert. 30 Min nach der Katalysatorzugabe wurde 0,73 g Butylvinylether zugegeben und das Gemisch wurde weiter bei 50 °C während 2 h gerührt. Ein Temperaturanstieg von 5 °C wurde beobachtet und das Reaktionsgemisch wurde deutlich viskoser. 15 Min nach Katalysatorzugabe wurde 0,91 g Butylvinylether zugegeben. Das Reaktionsgemisch wurde 15 Min weiter gerührt und 0,07 g N-Methylimidazol wurde zugegeben. Nach 30 Min bei 50 °C wurde der Inhalt des Reaktors abgefüllt und eine Lösung von 20 Gew.-% Polyoctenamer in Heptan wurde erhalten.

### Beispiel 10B (Vergleichsbeispiel): Membranaufreinigung von Polyoctenamer in Heptan mit Wolfram/Aluminium Katalysatorsystem und Zugabe Butylvinylether dann N-Methylimidazol

1,25 L Lösung von 20 Gew.-% Polyoctenamer in Heptan (nach dem Beispiel 5A hergestellt) wurde weiter mit 3,75 L Heptan auf 5 Gew.-% verdünnt. Die erhaltene 5 L Polymerlösung wurde während 3 Stunden bei 50°C im Kreis gepumpt und anschließend mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigte Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 1,5 g weißer Feststoff wurde erhalten. Das NMR-Spektrum des Feststoffs entsprach die erwartete Struktur eines Polyoctenamers, das 0,25 mol-% Vinylendgruppen und 0,30 mol-% Cyclohexenendgruppen enthielt. Cis/Trans Verhältnis der Doppelbindungen: 22 / 78

¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 54 °C
Schmelzenthalpie: 75 J/g
Molmasse M_{w}: 135.000 g/mol
Oligomeranteil (M < 3000 g/mol): 3,8%

Eine Elementarspurenanalyse zeigte, dass das Polymer 250 ppm Wolfram, 125 ppm Aluminium und 110 ppm Chlor enthielt.

**Zusammenfassung**

| **Beispiel** | **Katalysator** | **Lösungsmittel** | **Zugabe nach Reaktion** | **Membranfiltration** | **Ergebnisse nach 180 °C Tempern** |
|---|---|---|---|---|---|
| 1A | EADC/WCl₆ | Heptan | Keine | Nein | Smp. 54 °C, 250 ppm W, 125 ppm Al, 110 ppm Cl |
| 1B | EADC/WCl₆ | Heptan | Keine | 5 Waschvolumen | Smp. 54 °C, 250 ppm W, 125 ppm Al, 110 ppm Cl |
| 2A | C3 | Heptan | Keine | Nein | Smp.30 °C, 10 ppm Ru |
| 2B | C3 | Heptan | Keine | 5 Waschvolumen | Smp. 30 °C, Ausfall grauer Partikel |
| 2C | C3 | Heptan | Butylvinylether | 5 Waschvolumen | Smp. 49 °C, 3,5 ppm Ru |
| 3A | C3 | Heptan | Butylvinylether dann 2-Aminophenol | Nein | Smp. 29 °C, 8,6 ppm Ru |
| 3B* | C3 | Heptan | Butylvinylether dann 2-Aminophenol | 5 Waschvolumen | Smp. 59 °C, 0,2 ppm Ru |
| 4A | C3 | Heptan | Butylvinylether dann N-Methylimidazol | Nein | Smp. 49 °C, 8,4 ppm Ru |
| 4B* | C3 | Heptan | Butylvinylether dann N-Methylimidazol | 3 Waschvolumen | Smp. 57 °C, 0,3 ppm Ru |
| 5A | C3 | Toluol | Butylvinylether dann Acetonitril | Nein | Smp. 35 °C, 8,5 ppm Ru |
| 5B* | C3 | Toluol | Butylvinylether dann Acetonitril | 3 Waschvolumen | Smp. 57 °C, 2,1 ppm Ru |
| 6A | C3 | Toluol | Butylvinylether dann 2-Aminophenol | Nein | Smp. 30 °C, 8,5 ppm Ru |
| 6B* | C3 | Toluol | Butylvinylether dann 2-Aminophenol | 3 Waschvolumen | Smp. 59 °C, 0,7 ppm Ru |
| 7A | C3 | Toluol | Butylvinylether dann N-Methylimidazol | Nein | Smp. 47 °C, 8,8 ppm Ru |
| 7B* | C3 | Toluol | Butylvinylether dann N-Methylimidazol | 3 Waschvolumen | Smp. 60 °C, 0,3 ppm Ru |
| 8A | C3 | Toluol | Ethylvinylsu lfid dann N-Methylimidazol | Nein | Smp. 50 °C, 8,6 ppm Ru |
| 8B* | C3 | Toluol | Ethylvinylsu lfid dann N-Methylimidazol | 3 Waschvolumen | Smp. 59 °C, 1,2 ppm Ru |
| 9A | C3 | Toluol | Butylvinylether dann Pyridin | Nein | Smp. 29 °C, 8,4 ppm Ru |
| 9B* | C3 | Toluol | Butylvinylether dann Pyridin | 3 Waschvolumen | Smp. 57 °C, 1,0 ppm Ru |
| 10B | EADC/WCl₆ | Heptan | Butylvinylether dann N-Methylimidazol | 5 Waschvolumen | Smp. 54 °C, 250 ppm W, 125 ppm Al, 110 ppm Cl |

| | | | | | |
|---|---|---|---|---|---|
| * erfindungsgemäß EADC=Ethylaluminiumdichlorid, Smp. = Schmelzpunkt | | | | | |

Polyoctenamer, das mit Wolfram-Katalysator synthetisiert und anschließend einer Membranfiltration unterzogen wurde, zeigte einen Schmelzpunkt unterhalb von 57 °C. Zudem waren hohe Chlor- und Metallanteile enthalten (vgl. Beispiel 1B). Eine Zugabe eines Alkylvinylethers und einer Verbindung A (Beispiel 10B) zeigte keine Änderung in Schmelzpunkt und Metallanteilen.

Bei der rutheniumkatalysierten Herstellung von Polyoctenamer führte eine Membranfiltration ohne Alkylvinylether zu einem Ausfall grauer Partikel und zu einem sehr niedrigen Schmelzpunkt des Polyoctenamers von 30 °C (Beispiel 2B). Wurde Alkylvinylether oder Alkylvinylsulfid zugegeben, ohne eine Membranfiltration durchzuführen, waren die Polymere bei 180 °C nicht temperaturstabil (Schmelzpunkt Beispiele 3A, 4A, 5A, 6A, 7A, 8A, 9A zwischen 29°C und 50°C) und der Metallanteil im Polymer war viel höher.

Die Kombination aus Ruthenium-Katalysator, Alkylvinylether-Zugabe, Verbindung A-Zugabe und Membranfiltration führte zu einem bei 180 °C temperaturstabilen Polyoctenamer mit einem hohen Schmelzpunkt von 57 °C bis 60 °C und einem geringen Restmetallanteil.

## Patentansprüche

1. Verfahren zur Herstellung einer Polyalkenamer-haltigen Zusammensetzung, umfassend die Schritte:
a) Umsetzen mindestens eines Cycloalkens durch ringöffnende, metathetische Polymerisation in mindestens einem organischen Lösemittel unter Erhalt einer Polyalkenamer-haltigen Produktmischung, wobei die Polymerisation in Gegenwart mindestens eines metallhaltigen Katalysators durchgeführt wird, und wobei das Metall ausgewählt ist aus Rhenium, Ruthenium, Osmium oder Mischungen daraus, wobei das Cycloalken ausgewählt ist aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon,
b) Zugabe mindestens eines Alkylvinylderivats, welches ausgewählt ist aus C1- bis C12-Alkylvinylethern, C1-C12-Alkylvinylsulfiden oder Mischungen davon, nach der Polymerisation, wobei die Stoffmenge des Alkylvinylderivats mindestens der Stoffmenge an Katalysator entspricht,
c) Zugabe mindestens einer Verbindung A nach Zugabe des Alkylvinylderivats, wobei die Stoffmenge der Verbindung A mindestens der Stoffmenge an Katalysator entspricht, und wobei die Verbindung A mindestens eines der Merkmale i) oder ii) aufweist:
i) mindestens eine funktionelle Gruppe, die ausgewählt ist aus primären Aminogruppen, sekundären Aminogruppen, tertiären Aminogruppen, Thiolgruppen, Estergruppen, Carbonatestergruppen, Acetalgruppen, Aldehydgruppen, Carbonylgruppen, Carboxamidogruppen, Imidogruppen, Oximgruppen, Thioestergruppen, Nitrilgruppen, Thiocyanatgruppen, primären Ketiminogruppen, sekundären Ketiminogruppen, primären Aldiminogruppen, sekundären Aldiminogruppen, Sulfinylgruppen, Aminoxidgruppen, Carboxygruppen, Phosphinogruppen, Phosphanoxidgruppen, Phosphonogruppen oder
ii) mindestens ein gesättigter oder ungesättigter aliphatischer oder aromatischer heterocyclischer Ring mit 3 bis 14 Ringatomen, wobei die Ringatome mindestens ein Kohlenstoffatom und mindestens ein Atom ausgewählt aus Sauerstoff, Stickstoff und Schwefel enthalten, und
d) Aufarbeiten der Produktmischung zur Entfernung des Katalysators unter Erhalt der Polyalkenamer-haltigen Zusammensetzung, wobei die Aufarbeitung mittels Membranfiltration in mindestens einem organischen Lösemittel erfolgt, wobei das Polymer während der Membranfiltration gelöst ist.

2. Verfahren nach Anspruch 1, **dadurch gekennzeichnet, dass** Ethylvinylether, Butylvinylether oder Mischungen davon als Alkylvinylether zugegeben werden.

3. Verfahren nach einem der vorherigen Ansprüche, **dadurch gekennzeichnet, dass** Methylvinylsulfid, Ethylvinylsulfid, Propylvinylsulfid, Butylvinylsulfid und ihre Mischungen als Alkylvinylsulfid zugegeben werden.

4. Verfahren nach einem der vorherigen Ansprüche, **dadurch gekennzeichnet, dass** die funktionellen Gruppen i) ausgewählt sind aus primären Aminogruppen, sekundären Aminogruppen, Carboxamidogruppen, Nitrilgruppen, primären Ketiminogruppen, sekundären Ketiminogruppen, primären Aldiminogruppen, sekundären Aldiminogruppen, Carbonylgruppen, Aminoxidgruppen, Sulfinylgruppen, Phosphinogruppen und Phosphanoxidgruppen,

5. Verfahren nach einem der vorherigen Ansprüche, **dadurch gekennzeichnet, dass** die Verbindung A mindestens einen gesättigten oder ungesättigten aliphatischen heterocyclischen Ring mit 3 bis 14 Ringatomen oder mindestens einen aromatischen heterocyclischen Ring mit 5 bis 14 Ringatomen aufweist.

6. Verfahren nach einem der vorherigen Ansprüche, **dadurch gekennzeichnet, dass** die Verbindung A einen stickstoffhaltigen aromatischen Ring aufweist.

7. Verfahren nach einem der vorherigen Ansprüche, **dadurch gekennzeichnet, dass** die Membran der Membranfiltration eine trennaktive Schicht aufweist, die ausgewählt ist aus Polymeren, Glas, Metall, Keramik oder deren Gemischen.

8. Verfahren nach einem der vorherigen Ansprüche, **dadurch gekennzeichnet, dass** das Cycloalken ausgewählt ist aus der Gruppe bestehend aus Cyclopenten, Cyclohepten, Cycloocten, Cyclododecen und Mischungen davon.

9. Verfahren nach einem der vorherigen Ansprüche, **dadurch gekennzeichnet, dass** die Polymerisation in einem unpolaren aromatischen oder aliphatischen Lösungsmittel durchgeführt wird.

10. Verfahren nach einem der vorherigen Ansprüche, **dadurch gekennzeichnet, dass** Polymerisation und Membranfiltration in Lösemitteln durchgeführt und für Polymerisation und Membranfiltration das gleiche Lösemittel eingesetzt wird.

11. Verfahren nach einem der vorherigen Ansprüche, **dadurch gekennzeichnet, dass** das Metall des Katalysators aus Ruthenium ausgewählt wird.

12. Verfahren nach einem der vorherigen Ansprüche, **dadurch gekennzeichnet, dass** die Umsetzung von Cycloalkenen in Gegenwart eines Reglers, vorzugsweise in Gegenwart von acyclischen Alkenen als Regler mit einer oder mehreren nichtkonjugierten Doppelbindungen, oder cyclische Verbindungen, die in ihrer Seitenkette eine Doppelbindung aufweisen, erfolgt.

## Claims

1. Process for producing a polyalkenamer-containing composition, comprising the steps of:
a) reacting at least one cycloalkene by ring-opening metathesis polymerization in at least one organic solvent to obtain a polyalkenamer-containing product mixture, wherein the polymerization is performed in the presence of at least one metal-containing catalyst and wherein the metal is selected from rhenium, ruthenium, osmium or mixtures thereof, wherein the cycloalkene is selected from the group consisting of cyclobutene, cyclopentene, cycloheptene, cyclooctene, cyclononene, cyclodecene, cyclododecene, cycloocta-1,5-diene, 1,5-dimethylcycloocta-1,5-diene, cyclodecadiene, norbornadiene, cyclododeca-1,5,9-triene, tri-methylcyclododeca-1,5,9-triene, norbornene (bicyclo[2.2.1]hept-2-ene), 5-(3'-cyclohexenyl)-2-norbornene, 5-ethyl-2-norbornene, 5-vinyl-2-norbornene, 5-ethylidene-2-norbornene, dicyclo-pentadiene and mixtures thereof,
b) adding at least one alkyl vinyl derivative selected from C1- to C12-alkyl vinyl ethers, C1-C12-alkyl vinyl sulfides or mixtures thereof after the polymerization, wherein the amount of substance of the alkyl vinyl derivative corresponds at least to the amount of substance of catalyst,
c) adding at least one compound A after addition of the alkyl vinyl derivative, wherein the amount of substance of the compound A corresponds at least to the amount of substance of catalyst, and wherein the compound A has at least one of the features i) or ii):
i) at least one functional group selected from primary amino groups, secondary amino groups, tertiary amino groups, thiol groups, ester groups, carbonate ester groups, acetal groups, aldehyde groups, carbonyl groups, carboxamido groups, imido groups, oxime groups, thioester groups, nitrile groups, thiocyanate groups, primary ketimino groups, secondary ketimino groups, primary aldimino groups, secondary aldimino groups, sulfinyl groups, amino oxide groups, carboxyl groups, phosphino groups, phosphane oxide groups, phosphono groups or
ii) at least one saturated or unsaturated aliphatic or aromatic heterocyclic ring having 3 to 14 ring atoms, wherein the ring atoms contain at least one carbon atom and at least one atom selected from oxygen, nitrogen and sulfur and
d) working up the product mixture to remove the catalyst to obtain the polyalkenamer-containing composition, wherein the workup is carried out by membrane filtration in at least one organic solvent, wherein the polymer is dissolved during the membrane filtration.

2. Process according to Claim 1, **characterized in that** ethyl vinyl ether, butyl vinyl ether or mixtures thereof are added as the alkyl vinyl ether.

3. Process according to any of the preceding claims, **characterized in that** methyl vinyl sulfide, ethyl vinyl sulfide, propyl vinyl sulfide, butyl vinyl sulfide and mixtures thereof are added as the alkyl vinyl sulfide.

4. Process according to any of the preceding claims, **characterized in that** the functional groups i) are selected from primary amino groups, secondary amino groups, carboxamido groups, nitrile groups, primary ketimino groups, secondary ketimino groups, primary aldimino groups, secondary aldimino groups, carbonyl groups, amino oxide groups, sulfinyl groups, phosphino groups and phosphane oxide groups.

5. Process according to any of the preceding claims, **characterized in that** the compound A comprises at least one saturated or unsaturated aliphatic heterocyclic ring having 3 to 14 ring atoms or at least one aromatic heterocyclic ring having 5 to 14 ring atoms.

6. Process according to any of the preceding claims, **characterized in that** the compound A comprises a nitrogen-containing aromatic ring.

7. Process according to any of the preceding claims, **characterized in that** the membrane of the membrane filtration has a separation-active layer selected from polymers, glass, metal, ceramic or mixtures thereof.

8. Process according to any of the preceding claims, **characterized in that** the cycloalkene is selected from the group consisting of cyclopentene, cycloheptene, cyclooctene, cyclododecene and mixtures thereof.

9. Process according to any of the preceding claims, **characterized in that** the polymerization is performed in a nonpolar aromatic or aliphatic solvent.

10. Process according to any of the preceding claims, **characterized in that** the polymerization and the membrane filtration are performed in solvents and the same solvent is used for the polymerization and the membrane filtration.

11. Process according to any of the preceding claims, **characterized in that** the metal of the catalyst is selected from ruthenium.

12. Process according to any of the preceding claims, **characterized in that** the reaction of cycloalkenes is carried out in the presence of a chain transfer agent, preferably in the presence of acyclic alkenes as chain transfer agent having one or more non-conjugated double bonds, or cyclic compounds having a double bond in their side chain.

## Revendications

1. Procédé pour la préparation d'une composition contenant un polyalcènamère, comprenant les étapes de :
a) transformation d'au moins un cycloalcène par polymérisation métathétique avec ouverture de cycle dans au moins un solvant organique avec obtention d'un mélange de produits contenant un polyalcènamère, la polymérisation étant mise en œuvre en présence d'au moins un catalyseur contenant un métal, et le métal étant choisi parmi le rhénium, le ruthénium, l'osmium ou des mélanges correspondants, le cycloalcène étant choisi dans le groupe constitué par le cyclobutène, le cyclopentène, le cycloheptène, le cyclooctène, le cyclononène, le cyclodécène, le cyclododécène, le cycloocta-1,5-diène, 1,5-diméthylcycloocta-1,5-diène, le cyclodécadiène, le norbornadiène, le cyclododéca-1,5,9-triène, le triméthylcyclododéca-1,5,9-triène, le norbornène (bicyclo[2.2.1]hept-2-ène), le 5-(3'-cyclohexényl)-2-norbornène, le 5-éthyl-2-norbornène, le 5-vinyl-2-norbornène, le 5-éthylidène-2-norbornène, le dicyclopentadiène et des mélanges correspondants,
b) ajout d'au moins un dérivé d'alkylvinyle, qui est choisi parmi des alkylvinyléthers en C₁₋₁₂, des alkylvinylsulfures en C₁₋₁₂ ou des mélanges correspondants, après la polymérisation, la quantité de matière du dérivé d'alkylvinyle correspondant au moins à la quantité de matière de catalyseur,
c) ajout d'au moins un composé A après l'ajout du dérivé d'alkylvinyle, la quantité de matière du composé A correspondant au moins à la quantité de matière de catalyseur, et le composé A présentant au moins une des caractéristiques i) et ii) :
i) au moins un groupe fonctionnel, qui est choisi parmi des groupes amino primaire, des groupes amino secondaire, des groupes amino tertiaire, des groupes thiol, des groupes ester, des groupes ester de carbonate, des groupes acétal, des groupes aldéhyde, des groupes carbonyle, des groupes carboxamido, des groupes imido, des groupes oxime, des groupes thioester, des groupes nitrile, des groupes thiocyanate, des groupes cétimino primaire, des groupes cétimino secondaire, des groupes aldimino primaire, des groupes aldimino secondaire, des groupes sulfinyle, des groupes oxyde d'amine, des groupes carboxy, des groupes phosphino, des groupes oxyde de phosphane, des groupes phosphono ou
ii) au moins un cycle hétérocyclique aliphatique ou aromatique, saturé ou insaturé comportant 3 à 14 atomes de cycle, les atomes de cycle contenant au moins un atome de carbone et au moins un atome choisi parmi oxygène, azote et soufre, et
d) traitement du mélange de produits pour l'élimination du catalyseur avec obtention de la composition contenant un polyalcènamère, le traitement étant réalisé au moyen d'une filtration sur membrane dans au moins un solvant organique, le polymère étant dissous pendant la filtration sur membrane.

2. Procédé selon la revendication 1, **caractérisé en ce que** de l'éthylvinyléther, du butylvinyléther ou des mélanges de ceux-ci sont ajoutés en tant qu'alkylvinyléther.

3. Procédé selon l'une quelconque des revendications précédentes, **caractérisé en ce que** du méthylvinylsulfure, de l'éthylvinylsulfure, du propylvinylsulfure, du butylvinylsulfure et leurs mélanges sont ajoutés en tant qu'alkylvinylsulfure.

4. Procédé selon l'une quelconque des revendications précédentes, **caractérisé en ce que** les groupes fonctionnels i) sont choisis parmi des groupes amino primaire, des groupes amino secondaire, des groupes carboxamido, des groupes nitrile, des groupes cétimino primaire, des groupes cétimino secondaire, des groupes aldimino primaire, des groupes aldimino secondaire, des groupes carbonyles, des groupes oxyde d'amine, des groupes sulfinyle, des groupes phosphino et des groupes oxyde de phosphane.

5. Procédé selon l'une quelconque des revendications précédentes, **caractérisé en ce que** le composé A présente au moins un cycle hétérocyclique aliphatique saturé ou insaturé comportant 3 à 14 atomes de cycle ou au moins un cycle hétérocyclique aromatique comportant 5 à 14 atomes de cycle.

6. Procédé selon l'une quelconque des revendications précédentes, **caractérisé en ce que** le composé A présente un cycle aromatique contenant de l'azote.

7. Procédé selon l'une quelconque des revendications précédentes, **caractérisé en ce que** la membrane de la filtration sur membrane présente une couche séparatrice active, qui est choisie parmi des polymères, du verre, du métal, de la céramique ou leurs mélanges.

8. Procédé selon l'une quelconque des revendications précédentes, **caractérisé en ce que** le cycloalcène est choisi dans le groupe constitué par le cyclopentène, le cycloheptène, le cyclooctène, le cyclododécène et des mélanges correspondants.

9. Procédé selon l'une quelconque des revendications précédentes, **caractérisé en ce que** la polymérisation est mise en œuvre dans un solvant apolaire aromatique ou aliphatique.

10. Procédé selon l'une quelconque des revendications précédentes, **caractérisé en ce que** la polymérisation et la filtration sur membrane sont mises en œuvre dans des solvants et pour la polymérisation et la filtration sur membrane le même solvant est utilisé.

11. Procédé selon l'une quelconque des revendications précédentes, **caractérisé en ce que** le métal du catalyseur est choisi parmi le ruthénium.

12. Procédé selon l'une quelconque des revendications précédentes, **caractérisé en ce que** la transformation de cycloalcènes est réalisée en présence d'un régulateur, de préférence en présence d'alcènes acycliques en tant que régulateur comportant une ou plusieurs doubles liaisons non conjuguées, ou de composés cycliques, qui présentent une double liaison dans leur chaîne latérale.
